# EUROPÄISCHE PATENTSCHRIFT

(11) **EP 1 715 780 B1**
(45) Veröffentlichungstag und Bekanntmachung des Hinweises auf die Patenterteilung: **22.04.2009**
(21) Anmeldenummer: 05707847.9
(22) Anmeldetag: 26.01.2005
(51) Int. Cl.: A47J 31/44

(54) **KAFFEEMASCHINE MIT HÖHENVERSTELLBAREM AUSLAUF**
COFFEE MACHINE COMPRISING A HEIGHT-ADJUSTABLE SPOUT
MACHINE A CAFE COMPORTANT UN BEC D'ECOULEMENT REGLABLE EN HAUTEUR

(30) Priorität: 30.01.2004 DE 102004004820
(43) Veröffentlichungstag der Anmeldung: 02.11.2006
(73) Patentinhaber: BSH Bosch und Siemens Hausgeräte GmbH, 81739 München (DE)
(72) Erfinder: MAGG, Johann, 83368 St. Georgen (DE); MAYR, Andreas, 83254 Breitbrunn (DE); OBERMAIER, Markus, 83365 Nussdorf (DE)
(86) Internationale Anmeldenummer: PCT/EP2005/050325
(87) Internationale Veröffentlichungsnummer: WO 2005/072583

(56) Entgegenhaltungen:
- EP-A- 1 199 016
- CH-A5- 636 254
- DE-C1- 3 742 930
- US-A- 5 992 298

## Beschreibung

Die Erfindung betrifft eine Kaffeemaschine gemäß dem Oberbegriff von Anspruch 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch beheizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet werden kann.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer Kaffeemehlaufnahmeeinrichtung zugeführt wird. Dabei ist vorgesehen, dass der Kaffee, anders als bei der Espressomaschine, nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter kann mit einer Halterabdeckung, über die Wasser zugeführt wird, einen abgedichteten Druckraum bilden. Dem Halter für die Kaffeepads kommen dabei mehrere Funktionen zu. Zum einen stellt der Halter eine Dichtfläche bereit, so dass eine Druckkammer gebildet werden kann. Weiterhin hat der Halter eine Auslassöffnung, aus der der Kaffee austreten kann. Ferner soll der Kaffeepad in einer Weise in dem Halter gelagert sein, so dass das Durchströmen des Kaffeepads nicht behindert wird. Eine derartige Kaffeemaschine nimmt eine Zwischenstellung zwischen einer herkömmlichen drucklosen Kaffeemaschine und einer Espressomaschine ein.

Bei Espressomaschinen und solchen Kaffeemaschinen, die auf der Grundlage von Kaffeepads Kaffee zubereiten, wird der Kaffee meist über einen Auslauf direkt in eine Tasse geleitet. Dabei ist zu beachten, dass der Abstand zwischen dem Auslauf und einem Bereich zum Aufstellen der Tassen groß genug ist, um die Möglichkeit zu bieten, große Tassen unter dem Auslauf zu platzieren. Andererseits sollte bei der Entnahme von Kaffee mit einer kleinen Tasse ein nicht zu großer Abstand gewählt werden, so dass der Kaffee möglichst zielsicher und mit möglichst geringem Temperaturverlust in die Tasse gelangt. Um diese gegensätzlichen Anforderungen zu erfüllen, wurde beispielsweise in der DE 298 10 291 U1 und der WO02/38016 A1 bereits vorgeschlagen, eine höhenverstellbare Auslaufvorrichtung zur Verfügung zu stellen. Insbesondere bei hohen Ansprüchen an die Qualität des Kaffees ergeben sich aber auch bei höhenverstellbaren Auslaufvorrichtungen Probleme, da der Kaffee innerhalb der Kaffeemaschine verschieden lange Wege in Abhängigkeit der Einstellung des Auslaufs zurücklegen muss.

Aufgabe der Erfindung ist es, eine Kaffeemaschine mit höhenverstellbarem Auslauf zur Verfügung zu stellen, die eine gleichbleibend hohe Qualität des Kaffees sicherstellt.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf der gattungsgemäßen Kaffeemaschine dadurch auf, dass der Prallboden in festem Abstand zu der Kaffeeaustrittsöffnung angeordnet ist, auf den der aus der Kaffeeaustrittsöffnung austretende Kaffee auftrifft und von dem aus der Kaffee zu einem Auslauf, der mindestens einen in einer Führung (32) angeordneten Auslaufstutzen aufweist, der in der Führung (32) vertikal verschiebbar ist, geleitet wird. Insbesondere bei Kaffeemaschinen, die Kaffee unter hohem Druck in einer Brühkammer zubereiten und bei denen dieser Kaffee dann aus einer kleinen Kaffeeaustrittsöffnung zur Cremabildung austritt, hat der Abstand zwischen der Kaffeeaustrittsöffnung und dem Prallboden einen großen Einfluss auf die Kaffeequalität. Wenn dieser Abstand konstant gehalten wird aber dennoch ein höhenverstellbarer Auslauf zur Verfügung gestellt wird, können sowohl die Anforderungen an die hohe Kaffeequalität erfüllt werden, als auch die Möglichkeit zur Verfügung gestellt werden, unterschiedlich hohe Tassen mit optimalem Abstand zum Auslauf zu befüllen.

Der Auslauf weist mindestens einen in einer Führung angeordneten Auslaufstutzen, der in der Führung vertikal verschiebbar ist. Dies ist eine konstruktiv einfache aber dennoch wirkungsvolle Möglichkeit zur Höhenverstellung des Auslaufs. Ein solcher in einer Führung angeordneter Auslaufstutzen kann unter Fortbildung dieses Prinzips auch teleskopartig sein.

Es kann nützlich sein, dass der Auslaufstutzen zu seiner Höhenverstellung mit einer Handhabe versehen ist. Es ist somit nicht erforderlich, den mitunter heißen oder verschmutzen Auslaufstutzen selbst mit der Hand zu berühren. Vielmehr dient die Handhabe dazu, den Auslaufstutzen in seiner Höhe zu verstellen.

Dabei kann vorgesehen sein, dass die Handhabe an einem abflussseitigen Ende des Auslaufstutzens vorgesehen ist. Je nach Auslegung des Auslaufs, der Führung und des Auslaufstutzens kann eine solche Anbringung der Handhabe sinnvoll sein.

Bei andersartiger Auslegung der genannten Komponenten kann aber auch nützlich sein, dass die Handhabe an einem zuflussseitigen Ende des Auslaufstutzens vorgesehen ist.

Ebenfalls kann bevorzugt sein, dass die Handhabe über einen Durchbruch an der Führung mit dem Auslaufstutzen verbunden ist. Dies stellt bei gegebenen Abmessungen von Führung und Auslaufstutzen einen großen Spielraum und definierte Grenzen für die Verschiebung zur Verfügung.

Es ist bevorzugt, dass der Durchbruch als vertikaler Schlitz ausgebildet ist, in dem die mit dem Auslaufstutzen verbundene Handhabe aufwärts und abwärts verschieblich ist. Der Bewegungsspielraum, der von einem vertikalen Schlitz zur Verfügung gestellt wird, entspricht der gewünschten Aufwärts- und Abwärtsbewegung, die der Auslaufstutzen ausführen soll.

Weiterhin ist bevorzugt, dass zwei Auslaufstutzen vorgesehen sind, die gemeinsam mit einer einzigen Handhabe höhenverstellbar sind. Auf diese Weise können gleichzeitig zwei Kaffeetassen gefüllt werden.

Nützlicherweise ist vorgesehen, dass die Handhabe zwischen den zwei Auslaufstutzen angeordnet ist. Damit ist für den Benutzer der Kaffeemaschine auf einer intuitiven Ebene klar, dass die Handhabe beiden Auslaufstutzen zugeordnet ist.

Es kann aber auch nützlich sein, dass die in der Führung angeordneten Auslaufstutzen unabhängig voneinander vertikal verschiebbar sind. Dies bietet die Möglichkeit, dass gleichzeitig eine kleine und eine große Tasse mit Kaffee befüllt werden können, beispielsweise wenn gleichzeitig ein Espresso und ein Cappuccino zubereitet werden sollen.

Dies kann dann so realisiert sein, dass die Führung zwei vertikale Schlitze aufweist, in denen jeweils eine mit einem Auslaufstutzen verbundene Handhabe aufwärts und abwärts unabhängig verschoben werden können. Somit lässt sich auch bei der unabhängigen Verstellung der Auslaufstutzen sicherstellen, dass keine Verbrühungen auftreten.

Zusätzlich kann nützlicherweise vorgesehen sein, dass die Auslaufstutzen teleskopierbar sind. Hierdurch wird ein weiterer Freiheitsgrad bei der Höhenverstellung der Auslaufstutzen zur Verfügung gestellt.

Der Erfindung liegt die Erkenntnis zugrunde, dass aufgrund der Konstanz des Abstands zwischen Prallboden und Kaffeeaustrittsöffnung trotz höhenverstellbarem Auslauf eine gleichmäßig hohe Kaffeequalität sichergestellt werden kann.

Die Erfindung wird nun mit Bezug auf die begleitenden Zeichnungen anhand besonders bevor□zugter Ausführungsformen beispielhaft erläutert. Dabei zeigt:

Figur 1 eine perspektivische Darstellung einer erfindungsgemäßen Kaffeemaschine in einem ersten Zustand;

Figur 2 eine Schnittansicht der Kaffeemaschine gemäß Figur 1 in dem ersten Zustand;

Figur 3 eine perspektivische Darstellung einer erfindungsgemäßen Kaffeemaschine in einem zweiten Zustand; und

Figur 4 eine Schnittansicht der Kaffeemaschine gemäß Figur 3 in dem zweiten Zustand.

Bei der nachfolgenden Beschreibung der Zeichnungen bezeichnen gleiche Bezugszei□chen gleiche oder vergleichbare Komponenten.

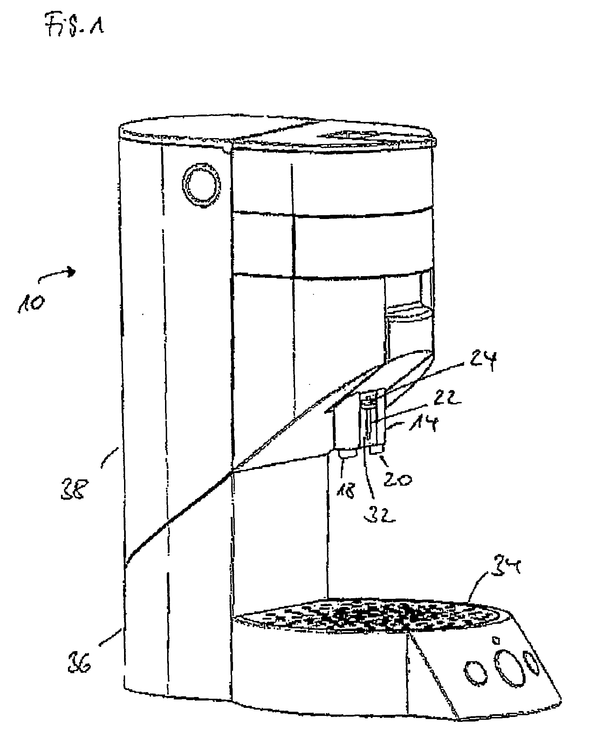

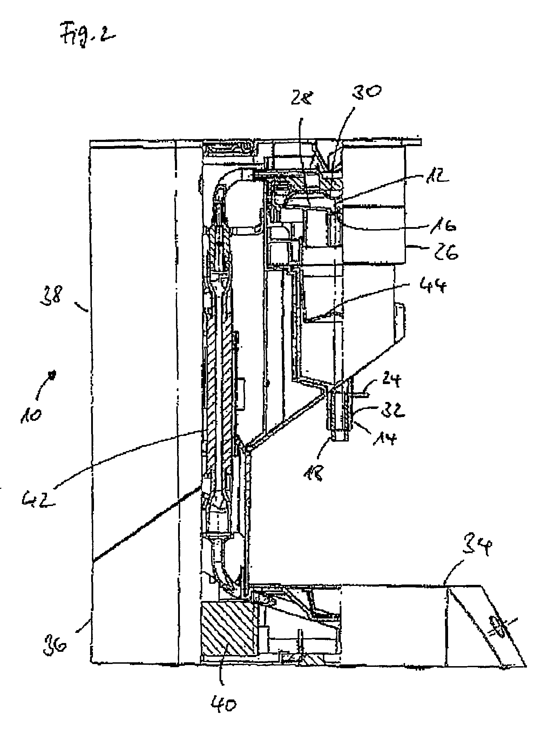

Figur 1 zeigt eine perspektivische Darstellung einer erfindungsgemäßen Kaffeemaschine in einem ersten Zustand. Figur 2 zeigt eine Schnittansicht der Kaffeemaschine gemäß Figur 1 in dem ersten Zustand. Die Kaffeemaschine 10 umfasst einen Wasserbehälter 38, der auf eine hintere säulenartige Baugruppe 36 aufgesetzt ist. Diesem Wasserbehälter 38 wird durch elektrische Betätigung einer Pumpe 40 Wasser entnommen. Das Wasser wird einem Durchlauferhitzer 42 zugeführt, um dann von oben durch das Brühkammeroberteil 30 in die Brühkammer 12 zu gelangen. Die Brühkammer 12 wird durch einen Kaffeepadhalter 28 und ein Brühkammeroberteil 30 gebildet. Der Kaffeepadhalter 28 ist mittels einer Schublade 26 in die Kaffeemaschine 10 einsetzbar. In dem Kaffeepadhalter 28 ist eine Kaffeeaustrittsöffnung 16 vorgesehen, über die Kaffee unter hohem Druck zur Cremabildung austritt und dann auf einen Prallboden 44 auftrifft. Dieser Prallboden 44 hat einen unveränderlichen Abstand zur Kaffeeaustrittsöffnung 16. Von dem Prallboden 44 gelangt der Kaffee dann zu einem Auslauf 14. Dieser Auslauf 14 umfasst eine Führung 32 und in der Führung 32 angeordnete Auslaufstutzen 18, 20. Diese Auslaufstutzen 18, 20 sind mittels einer Handhabe beziehungsweise eines Schiebers 24, der in einem Durchbruch beziehungsweise einem Schlitz 22 der Führung 32 gleitet, höhenverstellbar. Somit kann der Abstand zwischen dem Austritt des Kaffees aus dem Auslauf 14 und einer auf das Vorderteil 34 der Kaffeemaschine 10 aufgestellten Tasse variiert werden, während der Abstand zwischen dem Prallboden 44 und der Kaffeeaustrittsöffnung 16 konstant bleibt.

Der Schieber 24 ist in der dargestellten Ausführungsform am zuflussseitigen Ende zwischen den beiden Auslaufstutzen 18, 20 vorgesehen. Ebenfalls ist es möglich, den Schieber 24 am abflussseitigen Ende der Auslaufstutzen 18, 20 anzuordnen.

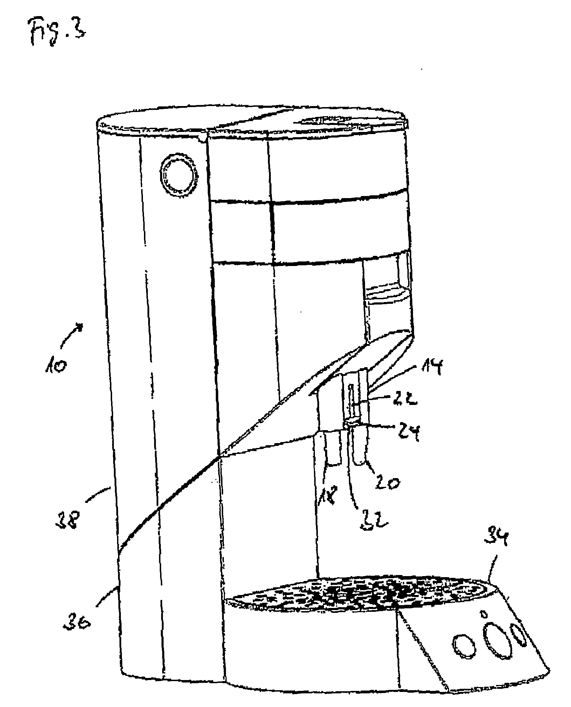

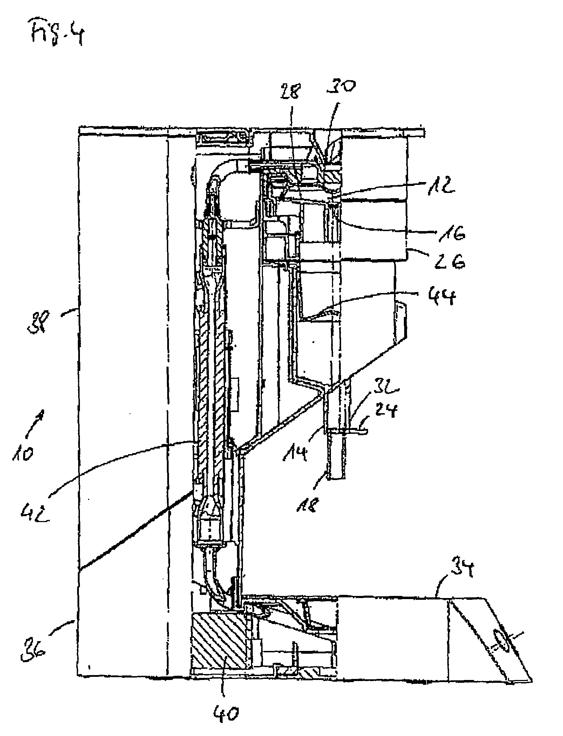

Figur 3 zeigt eine perspektivische Darstellung einer erfindungsgemäßen Kaffeemaschine in einem zweiten Zustand. Figur 4 zeigt eine Schnittansicht der Kaffeemaschine gemäß Figur 3 in dem zweiten Zustand. Hier ist der Auslauf in einer Stellung mit kleinem Abstand zwischen Vorderteil 34 und den Enden der Auslaufstutzen 18, 20 dargestellt.

Die in der vorstehenden Beschreibung, in den Zeichnungen sowie in den Ansprüchen offenbarten Merkmale der Erfindung können sowohl einzeln als auch in beliebiger Kombi□nation für die Verwirklichung der Erfindung wesentlich sein.

**Bezugszeichenliste**

10 Kaffeemaschine

12 Brühkammer

14 Auslauf

16 Kaffeeaustrittsöffnung

18 Auslaufstutzen

20 Auslaufstutzen

22 Durchbruch, Schlitz

24 Handhabe, Schieber

26 Schublade

28 Kaffeepadhalter

30 Brühkammeroberteil

32 Führung

34 Vorderteil

36 hintere Baugruppe

38 Wasserbehälter

40 Pumpe

42 Durchlauferhitzer

44 Prallboden

## Patentansprüche

1. Kaffeemaschine, insbesondere Espressomaschine mit einer Brühkammer (12), an der wenigstens eine Austrittsöffnung (16) für Kaffee vorgesehen ist und einem höhenverstellbaren Auslauf (14) für die Entnahme von Kaffee, dem ein in festem Abstand zu der Kaffeeaustrittsöffnung (16) angeordneter Prallboden (44) vorgelagert ist, auf den der aus der Kaffeeaustrittsöffnung (16) austretende Kaffee auftrifft und von dem der Kaffee zu dem Auslauf (14) geleitet wird, **dadurch gekennzeichnet, dass** der Auslauf (14) mindestens einen in einer Führung (32) angeordneten Auslaufstutzen (18, 20) aufweist, der in der Führung (32) vertikal verschiebbar ist.

2. Kaffeemaschine nach Anspruch 1, **dadurch gekennzeichnet, dass** der Auslaufstutzen (18, 20) zu seiner Höhenverstellung mit einer Handhabe (24) versehen ist.

3. Kaffeemaschine nach Anspruch 2, **dadurch gekennzeichnet, dass** die Handhabe (24) an einem abflussseitigen Ende des Auslaufstutzens (18, 20) vorgesehen ist.

4. Kaffeemaschine nach Anspruch 2, **dadurch gekennzeichnet, dass** die Handhabe (24) an einem zuflussseitigen Ende des Auslaufstutzens (18, 20) vorgesehen ist.

5. Kaffeemaschine nach einem der Ansprüche 2 bis 4, **dadurch gekennzeichnet, dass** die Handhabe (24) über einen Durchbruch (22) an der Führung (32) mit dem Auslaufstutzen (18, 20) verbunden ist.

6. Kaffeemaschine nach Anspruch 5, **dadurch gekennzeichnet, dass** der Durchbruch (22) als vertikaler Schlitz ausgebildet ist, in dem die mit dem Auslaufstutzen verbundene Handhabe (24) aufwärts und abwärts verschieblich ist.

7. Kaffeemaschine nach einem der Ansprüche 2 bis 6, **dadurch gekennzeichnet, dass** zwei Auslaufstutzen (18, 20) vorgesehen sind, die gemeinsam mit einer einzigen Handhabe (24) höhenverstellbar sind.

8. Kaffeemaschine nach Anspruch 7, **dadurch gekennzeichnet, dass** die Handhabe (24) zwischen den zwei Auslaufstutzen (18, 20) angeordnet ist.

9. Kaffeemaschine nach einem der Ansprüche 2 bis 6, **dadurch gekennzeichnet, dass** die in der Führung (32) angeordneten Auslaufstutzen (18, 20) unabhängig voneinander vertikal verschiebbar sind.

10. Kaffeemaschine nach Anspruch 9, **dadurch gekennzeichnet, dass** die Führung (32) zwei vertikale Schlitze (22) aufweist, in denen jeweils eine mit einem Auslaufstutzen (18, 20) verbundene Handhabe (24) aufwärts und abwärts unabhängig verschoben werden können.

11. Kaffeemaschine nach einem der Ansprüche1 bis 10, **dadurch gekennzeichnet, dass** die Auslaufstutzen (18, 20) teleskopierbar sind.

## Claims

1. Coffee machine, particularly expresso machine, with a brewing chamber (12), at which at least one outlet opening (16) for coffee is provided, and a height-adjustable outlet (14) for the removal of coffee, a baffle base (44) - on which the coffee issuing from the coffee outlet opening (16) impinges and from which the coffee is conducted to the outlet (14) - being disposed upstream of the outlet (14) and arranged at a fixed spacing from the coffee outlet opening (16), **characterised in that** the outlet (14) comprises at least one outlet stub pipe (18, 20) which is arranged in a guide (32) and is vertically displaceable in the guide (32).

2. Coffee machine according to claim 1, **characterised in that** the outlet stub pipe (18, 20) is provided with a handle (24) for height adjustment thereof.

3. Coffee machine according to claim 2, **characterised in that** the handle (24) is provided at an outflow end of the outlet stub pipe (18, 20).

4. Coffee machine according to claim 2, **characterised in that** the handle (24) is provided at an inflow end of the outlet stub pipe (18, 20).

5. Coffee machine according to any one of claims 2 to 4, **characterised in that** the handle (24) is connected with the outlet stub pipe (18, 20) by way of a passage (22) at the guide (32).

6. Coffee machine according to claim 5, **characterised in that** the passage (22) is formed as a vertical slot in which the handle (24) connected with the outlet stub pipe is displaceable upwardly and downwardly.

7. Coffee machine according to any one of claims 2 to 6, **characterised in that** two outlet stub pipes (18, 20), which are adjustable in height together by a single handle (24), are provided.

8. Coffee machine according to claim 7, **characterised in that** the handle (24) is arranged between the two outlet stub pipes (18, 20).

9. Coffee machine according to any one of claims 2 to 6, **characterised in that** the outlet stub pipes (18, 20) arranged in the guide (32) are vertically displaceable independently of one another.

10. Coffee machine according to claim 9, **characterised in that** the guide (32) has two vertical slots (22), in each of which a respective handle (24) connected with an outlet stub pipe (18, 20) can be independently displaced upwardly and downwardly.

11. Coffee machine according to any one of claims 1 to 10, **characterised in that** the outlet stub pipes (18, 20) are telescopic.

## Revendications

1. Machine à café, en particulier machine à espresso, comportant une chambre d'infusion (12), au niveau de laquelle est prévu au moins un orifice de sortie (16) du café, et une sortie (14)réglable en hauteur, pour prélever du café et en amont duquel se trouve, à distance fixe de l'orifice de sortie du café (16), un plateau déflecteur (44) sur lequel le café qui sort de l'orifice de sortie du café (16) tombe et qui dirige le café vers le dispositif de sortie (14), **caractérisée en ce que** le dispositif de sortie (14) comporte au moins un bec de sortie (18, 20) situé dans un guidage (32) et déplaçable verticalement dans ce guidage (32).

2. Machine à café selon la revendication 1, **caractérisée en ce que** le bec de sortie (18, 20) est pourvu d'une manette (24) qui en permet le réglage en hauteur.

3. Machine à café selon la revendication 2, **caractérisée en ce que** la manette (24) est prévue à une extrémité du bec de sortie (18, 20) située en aval de l'écoulement.

4. Machine à café selon la revendication 2, **caractérisée en ce que** la manette (24) est prévue à une extrémité du bec de sortie (18, 20) située en amont de l'écoulement.

5. Machine à café selon l'une des revendications 2 à 4, **caractérisée en ce que** la manette (24) est reliée au bec de sortie (18, 20) par l'intermédiaire d'une ouverture (22) sur le guidage (32).

6. Machine à café selon la revendication 5, **caractérisée en ce que** l'ouverture (22) se présente sous la forme d'une fente verticale dans laquelle la manette (24) reliée au bec de sortie peut se déplacer vers le haut et vers le bas.

7. Machine à café selon l'une des revendications 2 à 6, **caractérisée en ce que** sont prévus deux becs de sortie (18, 20) qui sont réglables en hauteur conjointement au moyen d'une unique manette (24).

8. Machine à café selon la revendication 7, **caractérisée en ce que** la manette (24) est située entre les deux becs de sortie (18, 20).

9. Machine à café selon l'une des revendications 2 à 6, **caractérisée en ce que** les becs de sortie (18, 20) situés dans le guidage (32) peuvent se déplacer verticalement indépendamment l'un de l'autre.

10. Machine à café selon la revendication 9, **caractérisée en ce que** le guidage (32) comporte deux fentes verticales (22) dans lesquelles respectivement une manette (24) reliée à un bec de sortie (18, 20) peut être déplacée vers le haut et vers le bas, indépendamment de l'autre.

11. Machine à café selon l'une des revendications 1 à 10, **caractérisée en ce que** les becs de sortie (18, 20) sont télescopiques.
